Europäisches Patentamt

European Patent Office

Office européen des brevets

(19)

(11) Veröffentlichungsnummer: **0 422 501 A1**

# (12) EUROPÄISCHE PATENTANMELDUNG

(21) Anmeldenummer: **90119007.4**

(22) Anmeldetag: **04.10.90**

(51) Int. Cl.5: **B09B 3/00**, B09B 5/00, B08B 3/06

(30) Priorität: **13.10.89 DE 3934258**

(43) Veröffentlichungstag der Anmeldung:
**17.04.91 Patentblatt 91/16**

(84) Benannte Vertragsstaaten:
**AT BE CH DE DK ES FR GB GR IT LI LU NL SE**

(71) Anmelder: **Döss, Christa**
**Naheweinstrasse 42**
**W-6533 Bretzenheim(DE)**

(72) Erfinder: **Döss, Walter**
**Naheweinstrasse 42**
**W-6533 Bretzenheim(DE)**

(74) Vertreter: **Becker, Bernd, Dipl.-Ing. et al**
**Hauptstrasse 10**
**W-6530 Bingen 17(DE)**

(54) **Recycling-Verfahren und -Anlage für ölverschmutzte Betriebsmittel.**

(57) Die Erfindung bezieht sich auf ein Recvcling-Verfahren und auf eine Recycling-Anlage für insbesondere ölverschmutzte Betriebsmittel, bei denen die Betriebsmittel gesammelt und bestimmte Materialien für eine Wiederverwendung sortiert und/oder gereinigt werden. Die Betriebsmittel werden nach Materialien grob vorsortiert, bestimmte der vorsortierten Teile zerkleinert, die zerkleinerten Teile nach Materialien getrennt, bestimmte der abgetrennten Teile gewaschen und die gewaschenen Teile nach Materialen getrennt. Bestimmte der abgetrennten Teile werden wiederverwendet und die anderen Teile je nach Verschmutzungsart und -grad sowie nach Materialien entsorgt, verbrannt oder deponiert. Als Zerkleinerungseinrichtungen werden Schredder, zum Waschen Waschtrommeln eingesetzt. Der Transport der Teile von einer Bearbeitungseinrichtung zur nächsten erfolgt mittels Transportbändern. Die Anlage arbeitet weitgehend vollautomatisch.

Fig. 1

EP 0 422 501 A1

## RECYCLING-VERFAHREN UND -ANLAGE FÜR ÖLVERSCHMUTZTE BETRIEBSMITTEL

Die Erfindung bezieht sich auf ein Recycling-Verfahren und eine Recycling-Anlage für ölverschmutze Betriebsmittel sowie auf eine Waschtrommel zur Verwendung bei diesen gemäß Oberbegriff der Ansprüche 1,9 bzw. 19.

Mit zunehmendem Anfall von Müll und gleichzeitig steigenden Rohstoffpreisen wächst das Interesse an einer Wiederverwertung von Abfallstoffen. Des weiteren nehmen infolge der zunehmenden Abfallmengen auch die Probleme beim Industriemüll zu, der zunehmend nicht mehr einfach deponiert werden kann, sondern entsorgt werden muß.

Zur Zerkleinerung des Mülls mit hohem Metallanteil, beispielsweise von Fahrzeugkarosserien und dergleichen, werden derzeit sogenannte Schredder-Anlagen eingesetzt, die derartige Materialien bis zu etwa faustgroßen Teilen zerkleinern können. Zur Trennung von Metall und Kunststoffen dienen Gebläse. Mittels Magneten und großen Siebtrommeln wird das Metall weiterverarbeitet und kann schließlich als Schrott eingeschmolzen und wiederverwendet werden. Die kunststoffhaltigen Teile werden gepreßt und auf Hausmülldeponien abgelagert, wobei sie eigentlich aufgrund der vielen Schmutzstoffe auf Sondermülldeponien abgelagert werden sollten. Recycling-Verfahren für die Kunststoffteile sind unwirtschaftlich und weitgehend noch nicht ausgereift. Eine Verbrennung dieses Abfallanteils führt zum Freiwerden schädlicher Gase.

Probleme bereitet auch die Verarbeitung von Abfall, der Fett, Schmiermittel, Öl und ähnliche Stoffe enthält, wie sie z.B. bei Tankstellen und Werkstätten als Abfall anfallen. Bisherige Recylcing-Verfahren sind sehr unzulänglich. Es erfolgt eine umständliche Reinigung mittels Waschflüssigkeit in einzelnen Waschtrommeln. Einzelne Teile werden von Hand sortiert oder diese Abfallstoffe bzw. verschmutzten Betriebsmittel werden einfach auf Deponien abgelagert.

Der Erfindung liegt die Aufgabe zugrunde, ein Verfahren und eine Anlage zum Recycling von insbesondere ölverschmutzten Betriebsmitteln zu schaffen, bei denen eine Trennung in verschiedene Stoffe zur leichteren Weiterverarbeitung und Entsorgung wirtschaftlich erfolgt.

Diese Aufgabe ist durch die Erfindung bei einem Recycling-Verfahren und einer Recycling-Anlage für insbesondere ölverschmutzte Betriebsmittel mit Merkmalen gemäß den Ansprüchen 1 und 9 gelöst. Vorteilhafte Weiterbildungen des erfindungsgemäßen Verfahrens und der erfindungsgemäßen Anlage sind Gegenstand der Unteransprüche. Außerdem hat die Erfindung zu einer Waschtrommel, insbesondere zur Verwendung bei einem erfindungsgemäßen Verfahren und einer erf indungsgemäßen Anlage, geführt, die mit den Merkmalen des Anspruchs 19 ausgebildet ist. Vorteilhafte Weiterbildungen der erfindungsgemäßen Waschtrommel sind Gegenstand der folgenden Unteransprüche.

Bei dem erfindungsgemäßen Recycling-Verfahren für insbesondere ölverschmutzte Betriebsmittel, bei dem die Betriebsmittel gesammelt und bestimmte Materialien für eine Wiederverwendung sortiert und/oder gereinigt werden, werden
- die Betriebsmittel nach Materialien grob vorsortiert,
- bestimmte der grob vorsortierten Teile zerkleinert und dabei freiwerdendes Öl gesammelt,
- die zerkleinerten Teile nach Materialien getrennt,
- bestimmte der abgetrennten Teile zum weiteren Entfernen von Öl, Schmutz etc. gewaschen,
- die gewaschenen Teile nach Materialien getrennt,
- bestimmte der abgetrennten Teile wiederverwendet und
- die übrigen Teile je nach Verschmutzungsart und -grad sowie abhängig von den Materialien entsorgt, verbrannt oder deponiert.

Bei Anwendung des erfindungsgemäßen Verfahrens werden beispielsweise aus einem Annahmebehälter gesammelte Betriebsmittel, d.h. Abfallteile, mittels einer Greifereinrichtung über eine Rutsche oder direkt einer Grobsortiervorrichtung zugeführt, wo eine Vorsortierung beispielsweise nach Art oder Größe der Betriebsmittel, erfolgt. Wird etwa eine Siebtrommel eingesetzt, so werden kleinere Teile, sogenannte Kleinteile, abgetrennt, und es kann beispielsweise Sand, Sägemehl etc. direkt einem hierfür vorgesehenen Behälter zugeführt werden, während andere Teile, beispielsweise kleine Metallteile, wieder zurückgeführt werden. Die Vorsortierung kann auch teilweise eine Handverlesung umfassen, in deren Verlauf plötzlich Kanister und ähnliche geeignete Metallteile entnommen und einer Presse zugeführt werden, nach deren Durchlauf sie in einem Behälter gesammelt werden.

Die Vorsortierung kann auch eine Trennung nach Metall, Kunststoff und/oder Textilien umfassen. Beispielsweise werden Lappen und ähnliche Teile aussortiert und in Behältern zur weiteren Verbrennung gesammelt.

Bestimmte der grob vorsortieren Teile werden beispielsweise in Schreddern zerkleinert, wobei dies bereits nach Metall und Kunststoff getrennt erfolgen kann. In diesem Fall werden beispielsweise in einem Schredder Öldosen aus Metall und Ölfilter, die Eisen und Papier enthalten, in einem Schredder und beispielsweise Öldosen aus Kunststoff und dergleichen in einem anderen Schridder zerkleinert. Die Zerkleinerung kann jedoch unter Umständen bei geringeren Abfallmengen auch zusammen erfolgen. Bei der Zerkleinerung wird ein Teil des noch in diesen Betriebsmitteln enthaltenen Öls etc. frei und wird in einem Auffangbehälter gesammelt.

Nach der Zerkleinerung erfolgt eine Trennung der zerkleinerten Teile, vorzugsweise nach Stahl, Nichteisenmetall und/oder Filtermaterial, wie Filterpapier. Bei dieser Trennung werden Nichteisenmetalle von Hand ausgelesen.

Bestimmte der abgetrennten Teile werden zum weiteren Entfernen von Öl und anderen Verschmutzungen gewaschen, vorzugsweise mit heißem Wasser und ggf. Sodazusatz als Waschflüssigkeit. Anschließend werden die gewaschenen Teile weiter nach Materialien getrennt. Es können z.B. Stahlteile und unter Umständen noch vorhandene Filtermaterialreste und gegebenenfalls weitere Nichteisenmetalle getrennt werden.

Bestimmte der abgetrennten Teile, etwa Stahlteile und Teile aus Nichteisenmetall, werden als Schrott wiederverwendet. Die übrigen Teile werden je nach Verschmutzungsart und -grad sowie abhängig von den Materialien entsorgt, verbrannt oder deponiert. Gewaschene Papierreste werden beispielsweise in Fernwärmeanlagen verbrannt. Ölverschmutzte Betriebsmittel, wie Putzlappen, Saug- bzw. Sägemittel, ölbindende Granulate und die ausgelaugten Waschmittel oder -flüssigkeiten werden entsorgt.

Vorzugsweise wird die Waschflüssigkeit zunächst wiederverwendet, wobei zweckmäßig Öl und dergleichen aus der Waschflüssigkeit abgeschieden und entsorgt wird. Dies führt zu einem verringerten Anfall von Abfallstoffen bei dem erfindungsgemäßen Recycling-Verfahren selbst. Hierbei wird selbstverständlich auch verhindert, daß die Waschflüssigkeit in die Kanalisation etc. gelangt. Wenn die Waschflüssigkeit weitgehend verbraucht bzw. ausgelaugt ist, wird sie, wie erwähnt, nach einer Ölabscheidung entsorgt.

Bei dem erfindungsgemäßen Verfahren fallen somit als getrennte Abfallstoffe an: Altöl, Eisenschrott, Nichteisenmetalle, Papier, zu entsorgende Reststoffe und zu entsorgende Emulsionen, wie Öl/Waschflüssigkeitsgemische.

Eine erfindungsgemäße Recycling-Anlage für insbesondere ölverschmutzte Betriebsmittel mit einer Einrichtung zum Sortieren der Betriebsmittel und einer Einrichtung zum Reinigen der Betriebsmittel umfaßt

- eine Einrichtung zum groben Vorsortieren der Betriebsmittel nach Materialien und/oder Art oder Größe,
- eine Einrichtung zum Zerkleinern bestimmter der vorsortierten Teile,
- eine Einrichtung zum Trennen der zerkleinerten Teile nach Materialien,

- eine Einrichtung zum Waschen von abgetrennten Teilen,
- eine Einrichtung zum Trennen der gewaschenen Teile nach Materialien und
- Behälter zum Sammeln der so sortierten Teile.

Für den Transport der Betriebsmittel und von deren Teilen sind vorzugsweise Förderbänder vorgesehen, die einen vollautomatischen Ablauf der erfindungsgemäßen Recyclingschritte ermöglichen. Die Verzweigung der einzelnen Förderwege erfolgt direkt zur Entnahme der Teile von den Förderbändern zu weiteren Bearbeitungseinrichtungen oder durch Spezialförderbänder mit Sortierfunktion, beispielsweise in Form von Magnetbändern, die die Trennung von Stahlteilen ermöglichen. Als Einrichtung zum Vorsortieren sind zweckmäßig eine oder mehrere Siebtrommeln vorgesehen, die eine schnelle Trennung der Teile nach Größe, entsprechend den jeweiligen Siebabmessungen, ermöglichen. Es können beispielsweise auch verschiedene Siebtrommeln nacheinander angeordnet sein.

Bei einem vorteilhaften Ausführungsbeispiel der erfindungsgemäßen Recycling-Anlage ist eine Presse der (den) Siebtrommel(n) für bestimmte der vorsortierten Teile nachgeordnet. Diese Presse dient z.B. zum Zusammendrücken von Blechkanistern und dergleichen.

Zum Zerkleinern vorsortierter Metall- und/oder Kunststoffteile sind vorteilhaft Schredder vorgesehen, wobei diese gemeinsam für Metall- und Kunststoffteile, jedoch auch getrennt vorgesehen sein können. Es kann auch eine Umschalteinrichtung angeordnet sein derart, daß bei großem Abfallanfall zwei oder mehrere Schredder parallel arbeiten und bei geringerem Abfallanfall eine gemeinsame Zerkleinerung von Metall- und Kunststoffteilen erfolgt. Bei der gemeinsamen Zuführung zu einem Schredder muß selbstverständlich die Trennung von Kunststoff und Metall nach der Zerkleinerung erfolgen, wobei bei getrennter Zerkleinerung ebenfalls eine weitere Trennanordnung vorgesehen sein kann.

Als Einrichtung zum Waschen von abgetrennten Teilen sind zweckmäßig Waschtrommeln vorgesehen. Zweckmäßig ist für die Waschflüssigkeit eine Abscheideeinrichtung vorgesehen, die die Waschflüssigkeit von dem Öl/Waschflüssigkeitsgemisch trennt. Zur Trennung von Öl- und Waschflüssigkeit kann beispielsweise ausgenutzt werden, daß Öl auf z.B. Wasser schwimmt, und das oben befindliche Öl wird zum Überfließen gebracht und die Waschflüssigkeit unten abgepumpt. Eine Einrichtung dient zum Sammeln und Abführen des so abgeschiedenen Öls, während eine Rückführeinrichtung zum Rückführen der abgetrennten Waschflüssigkeit in den Waschflüssigkeitskreislauf nach einer Aufheizung vorgesehen ist.

Eine erfindungsgemäße Waschtrommel, insbesondere zur Verwendung bei einer erfindungsgemäßen Recycling-Anlage. mit einer Transportwendel und einem Rührer ist dadurch gekennzeichnet, daß am einen Ende der Waschtrommel im Randbereich eine oder mehrere Öffnungen vorgesehen sind, durch die das Öl/Waschflüssigkeitsgemisch, gewöhnlich eine Emulsion, austreten kann. Hierbei ist die Waschtrommel zweckmäßig mit diesem Ende leicht nach unten geneigt angeordnet, so daß die am anderen Ende eintretende Waschflüssigkeit bei rotierendem Trommelinhalt zu dem öffnungsversehenden Ende der Waschtrommel hin gelangt und dort durch die Öffnung(en) nach unten austritt, wo sie aufgefangen werden kann. Die Öffnungen sind zweckmäßig dadurch realisiert, daß im Trommelboden ein Lochkranz vorgesehen ist. Dieser läßt sich auf einfache Weise fertigen und ermöglicht ein gleichmäßiges Austreten der die Schmutzpartikel mitabführenden Waschflüssigkeit.

Zum Abfangen des Gewichts der Füllast und zur Verstärkung weist der Trommelboden der Waschtrommel zweckmäßig Verstärkungsrippen auf. Diese sind beispielsweise kreuzförmig aufgebracht bzw. angeformt.

Zum Schutz des Trommelbodens und des Trommelinneren ebenso wie zum Schutz gegen Spritzen von Waschflüssigkeit nach außen ist der Trommelboden von einer Abdeckung überdeckt.

Diese ist zweckmäßig an einer auf der Antriebswelle sitzenden Buchse angebracht und etwas gewölbt oder konisch ausgebildet, wobei sie den Trommelboden seitlich mit Abstand umgreift.

Unterhalb der erfindungsgemäßen Waschtrommel ist vorteilhaft eine Abscheide- und Rückführeinrichtung für das Öl/Waschflüssigkeitsgemisch angeordnet. Diese Einrichtungen können in eine Bodenvertiefung oder Grube eingebracht sein, so daß die Waschtrommel relativ tief und damit gut erreichbar gelagert sein kann.

Die Erfindung wird im folgenden weiter anhand eines bevorzugten Ausführungsbeispiels und der Zeichnung erläutert. In der Zeichnung zeigen:

Fig. 1 eine schematische Draufsicht einer erfindungsgemäßen Recycling-Anlage,

Fig. 2 eine schematische Darstellung in Art eines Flußdiagramms, die den Recycling-Verfahrensablauf bei der in Fig. 1 dargestellten Recycling-Anlage veranschaulicht,

Fig. 3 eine schematische seitliche Teilschnittsansicht einer erfindungsgemäßen Waschtrommel,

Fig. 4 eine vergrößerte Teilansicht des Trommelbodens und der Abdeckung der Waschtrommel von Fig. 3, und

Fig. 5 einen Schnitt nach Linie V-V von Fig. 4.

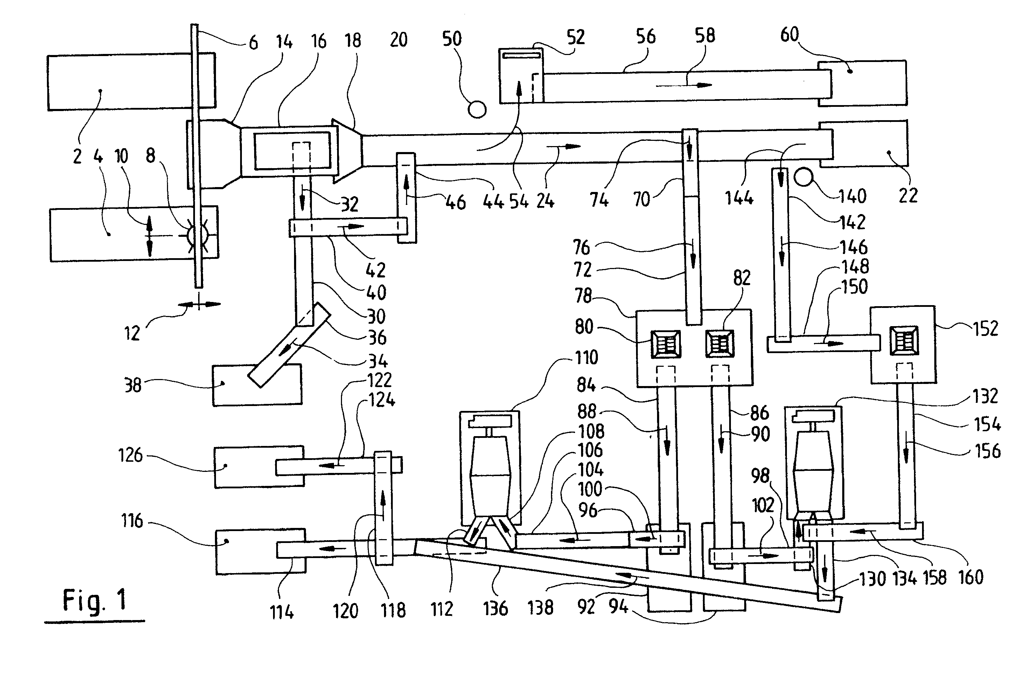

Die erfindungsgemäße Recycling-Anlage wird im folgenden zunächst anhand von Fig. 1 erläutert.

Behälter 2, 4 dienen zur Aufnahme und zum Sammeln von ölverschmutzten Betriebsmitteln, die von Betrieben, wie Tankstellen, Werkstätten etc., aber auch von Privatleuten angeliefert werden und in möglichst großem Umfang wiederverwendet werden sollen. Oberhalb von dem in Fig. 1 rechten Endbereich der Behälter 2, 4 befindet sich eine Fahrschiene 6, an der ein Greifer 8 längsverschieblich angeordnet ist, wie durch den Pfeil 10 veranschaulicht ist. Auf diese Weise kann der Greifer 8 ölverschmutzte Betriebsmittel bzw. Abfallteile wahlweise dem Behälter 2 und dem Behälter 4 an gewünschter Stelle entnehmen. Die Fahrschiene 6 ist selbst in dazu senkrechter Richtung, d.h. in Fig. 1 von links nach rechts, verfahrbar, wie durch den Pfeil 12 verdeutlicht ist. Auf diese Weise kann der Greifer an jeder bellibigen Stelle der Behälter 2, 4 Teile entnehmen.

Zwischen den Behältern 2, 4 und unterhalb der Fahrschiene 6 befindet sich eine Rutsche 14, in bzw. auf die der Greifer 8 aus den Behältern 2, 4 entnommene Teile fallen läßt und die diese Teile entlang rutschen. An die Rutsche 14 schließt sich eine Siebtrommel 16 an, an die sich eine weitere Rutsche 18 anschließt. Der Rutsche 18 ist ein Transportband 20 nachgeordnet, an dessen Ende sich ein Behälter 22 zur Aufnahme von Lappen, wie Stofflappen, etc., die zur Verbrennung vorgesehen sind, befindet. Die Transportrichtung des Transportbandes 20 ist in Fig. 1 von links nach rechts (vgl. Pfeil 24).

Unterhalb der Siebtrommel 16 befindet sich ein Ende eines von dieser fort führenden Transportbandes 30, dessen Förderrichtung durch den Pfeil 32 gezeigt ist. Unterhalb des Transportbandes 30 befindet sich an dessen anderem Ende ein etwas schräg in Rückwärtsrichtung angeordnetes und laufendes (vgl. Pfeil 34) Transportband 36 mit seinem einen Endbereich. Der andere Endbereich befindet sich oberhalb eines Behälters 38, in dem Teile, wie Sand, Sägemehl, etc., gesammelt werden. Der Behälter 38 befindet sich seitlich mit Abstand etwa in Höhe der Siebtrommel 16 und der Rutsche 14.

Oberhalb des Transportbandes 30 befindet sich ein quer zu diesem und damit parallel zum Tansportband 20 angeordnetes Transportband 40, dessen Transportrichtung in Fig. 1 nach rechts ist (vgl. Pfeil 42). Das Transportband 40 ist als Magnetband ausgebildet und dient zur Entnahme und zum Abtransport von magnetischen Metallteilen, wie z.B. Muttern, vom Transportband 30. Am in Transportrichtung vorderen Ende des Transportbandes 40 befindet sich unter diesem das eine Ende eines zu ihm in Querrichtung verlaufenden Transportbandes 44, dessen Transportrichtung, wie durch den Pfeil 46 gezeigt, zum Transportband 20 hin gerichtet ist. Durch die Transportbänder 30, 40 und 44 werden somit magnetische Teile wieder der Recycling-Anlage zugeführt, die zunächst durch die Siebtrommel 16 aussortiert worden sind.

In Transportrichtung nach der Wiederzuführungsstelle durch das Transportband 44 ist ein Handverlesearbeitsplatz 50 vorgesehen. An dieser Stelle werden manuell Blechteile, wie z.B. Blechkanister, von Hand aussortiert und einer Presse 52 zugeführt, was durch den Pfeil 54 angedeutet ist. Zum Abführen der gepreßten Teile von der Presse 52 ist ein Transportband 56 vorgesehen, dessen Förderrichtung in Fig. 1 von links nach rechts ist (vgl. Pfeil 58) und an dessen anderem Ende sich ein Behälter 60 befindet, in dem gepreßte Blechgebinde gesammelt werden.

Im Bereich des letzten Drittels des Transportbandes 24 befindet sich ein zu diesem quer verlaufendes Transportband 70, das als Magnetband ausgebildet ist und dem ein weiteres Transportband 72 nachgeordnet ist. Die Transportrichtung der Transportbänder 70, 72 ist durch Pfeile 74, 76 dargestellt. Mittels des Transportbandes 74 werden magnetische Metallteile, wie Ölfilter, Blechdosen, vom Transportband 20 fortgeführt. Das Transportband 72 führt zu einer Doppel-Schredderanordnung 78, d.h. die Teile auf dem Transportband 72 können einem Schredder 80 und einem Schredder 82 nach Wahl zugeführt werden. Dies kann durch Verstellen des Förderbandes selbst oder einer diesem nachgeordneten Verteilanordnung erfolgen. In dem Schredder 80 bzw. 82 werden die Metallteile zerkleinert. Den Schreddern 80, 82 sind parallele Transportbänder 84, 86 nachgeordnet, deren Transportrichtung durch Pfeile 88, 90 angedeutet ist. Die Transportbänder 84, 86 führen zu Behältern 92, 94. Oberhalb der Enden der Transportbänder 84, 86 sind quer zu diesen und von diesen fort transportierende, als Magnetbänder ausgebildete Transportbänder 96, 98 angeordnet, deren Transportrichtung durch Pfeile 100, 102 dargestellt ist. Mittels der Transportbänder 96, 98 werden somit magnetische Teile abtransportiert, während die restlichen Teile in den Behältern 92, 94 gesammelt werden.

Dem Transportband 96 ist ein in derselben Richtung transportierendes (vgl. Pfeil 104) Transportband 106 nachgeordnet. Das Transportband 106 führt über ein weiteres kurzes Transportband 108 zu einer Waschtrommel 110. In der Waschtrommel 110 werden die Metallteile durch eine erwärmte Waschflüssigkeit von Ölresten, Fett und dergleichen, gereinigt. Ein kurzes Transportband 112 dient zum Transportieren der gereinigten Metallteile aus der Waschtrommel 110 auf ein weiteres Transportband 114, das zu einem Behälter 116 führt.

Quer zum Transportband 114 ist ein Transportband 118 angeordnet, das als Magnetband ausgebildet ist und dessen Förderrichtung durch den Pfeil 120 dargestellt ist. Zum Transportband 118 erstreckt sich wiederum in Querrichtung, damit parallel zum Transportband 114, ein in derselben Richtung förderndes (vgl. Pfeil 122) Transportband 124. Das Transportband 124 führt zu einem Behälter 126, in dem Metallteile gesammelt werden. Das Transportband 118, das Transportband 124 und der Behälter 126 werden insbesondere vorgesehen, wenn eine besonders gute Trennung der Metallteile von den Kunststoffteilen erfolgen soll. Es kann auch ein zusätzlicher Behälter 128 sowie eine Wascheinrichtung zum Reinigen der so selektierten Metallteile mittels Sprühdüsen vorgesehen sein. Der Behälter 128 dient dann zum Auffangen von Waschflüssigkeit.

Das als Magnetband ausgebildete Transportband 98, das die zerkleinerten magnetischen Teile aus dem Schredder 82 fort führt, führt diese über ein kurzes Transportband 130 einer Waschtrommel 132 zu. Von der Waschtrommel 132 führt ein Transportband 134 fort, das in ein längeres, in Fig. 1 schräg verlaufend dargestelltes Transportband 136 mündet. Die Förderrichtung des Transportbandes 136 ist durch den Pfeil 138 dargestellt. Das Transportband 136 führt zu dem Transportband 114, d.h. in der Anlage hinter der Waschtrommel 110. Die an dieser Stelle zugeführten Metallteile aus dem Schredder 82 haben dieselbe Behandlung erfahren wie die Metallteile aus dem Schredder 80, die die Waschtrommel 110 durchlaufen haben.

Im Endbereich des Transportbandes 20 befindet sich ein Handverlesearbeitsplatz 140. An dieser Stelle werden vom Transportband 20 Kunststoffteile entnommen und auf einem quer zu diesem und von diesem fort führenden Transportband 142 abgelegt (vgl. Pfeile 144, 146). An das Transportband 142 schließt sich ein weiteres Transportband 148 an, das in Querrichtung angeordnet ist und parallel zur Richtung des Transportbandes 20 fördert (vgl. Pfeil 150). Das Transportband 148 führt zu einem Schredder 152, in dem die Kunststoffteile zerkleinert werden. Vom Schredder 152 führt ein Transportband 154 fort, dessen Transportrichtung durch den Pfeil 156 veranschaulicht ist. Dem Transportband 154 ist ein quer verlaufendes (vgl. Pfeil 158) Transportband 160, das zu dem zu der Waschtrommel 132 führenden Transportband 130 führt.

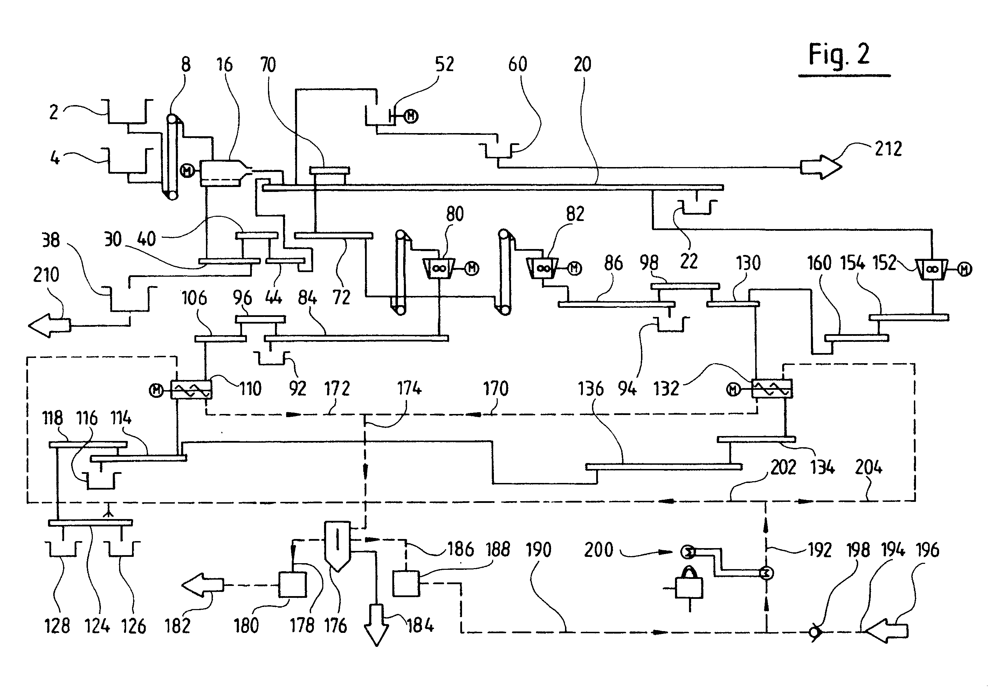

Die verschiedenen Verknüpfungen der einzelnen Arbeitsstationen und Transportbänder sind in dem Flußdiagramm von Fig. 2 verdeutlicht. Gleiche Teile sind mit gleichen Bezugszeichen bezeichnet.

Gestrichelte Linien, die von den Waschtrommeln fort führen, deuten Leitungen 170, 172 zum Abführen von Öl-Emulsion an, die in eine Leitung 174 zu einem Abscheider 176 münden. Eine Leitung 178 führt vom Abscheider 176 zu einem Behälter 180 für Altöl, von dem aus das Öl der Entsorgung zugeführt wird, wie durch den Pfeil 182 angedeutet ist. Aus dem Abscheider 176 werden ferner Feststoffe fortgeführt, wie durch den Pfeil 184 angedeutet ist. Vom Abscheider 176 führt eine Leitung 186 fort, die in einen Behälter 188 für Waschflüssigkeit mündet. Vom Behälter 188 führt eine Leitung 190 fort, von der eine Leitung 192 abzweigt. In die Leitung 192 führt eine Leitung 194, die an eine Waschflüssigkeitsquelle im Fall von Wasser Frischwasserzufuhr 196 über ein Rückschlagventil 198 angeschlossen ist. Die Leitung 192 ist mit einer Heizung 200 versehen, die schematisch angedeutet ist. Die Leitung 192 verzweigt sich in zwei Leitungen 202, 204, die die Waschflüssigkeit wieder den Waschtrommeln 110, 132 zuführen.

Pfeile 210, 212 deuten eine Entsorgung für das in den Behältern 38, 60 gesammelte Betriebsmaterial an.

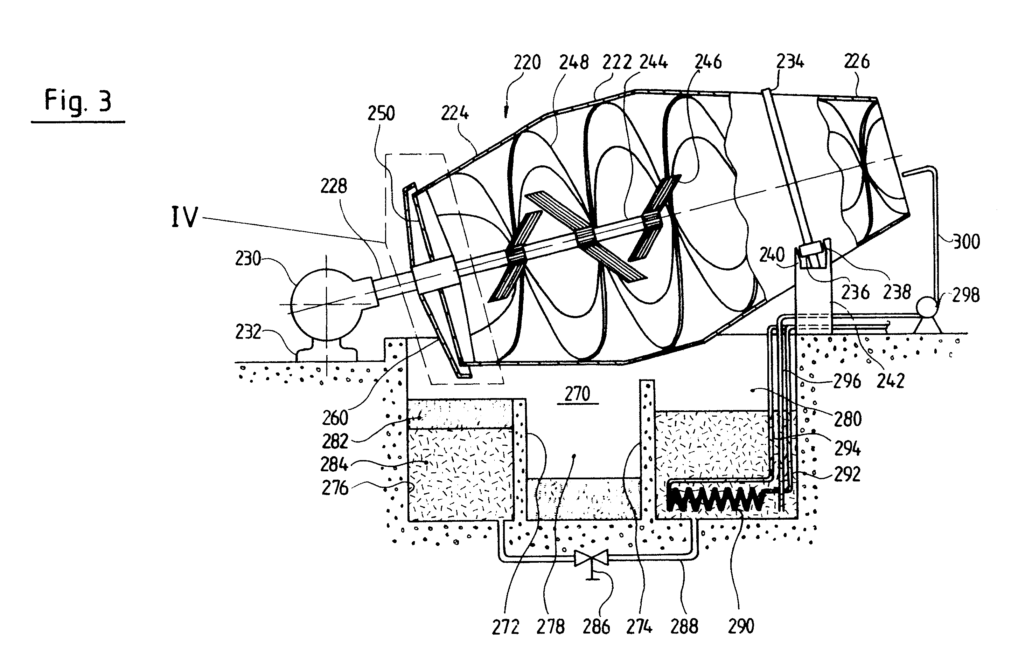

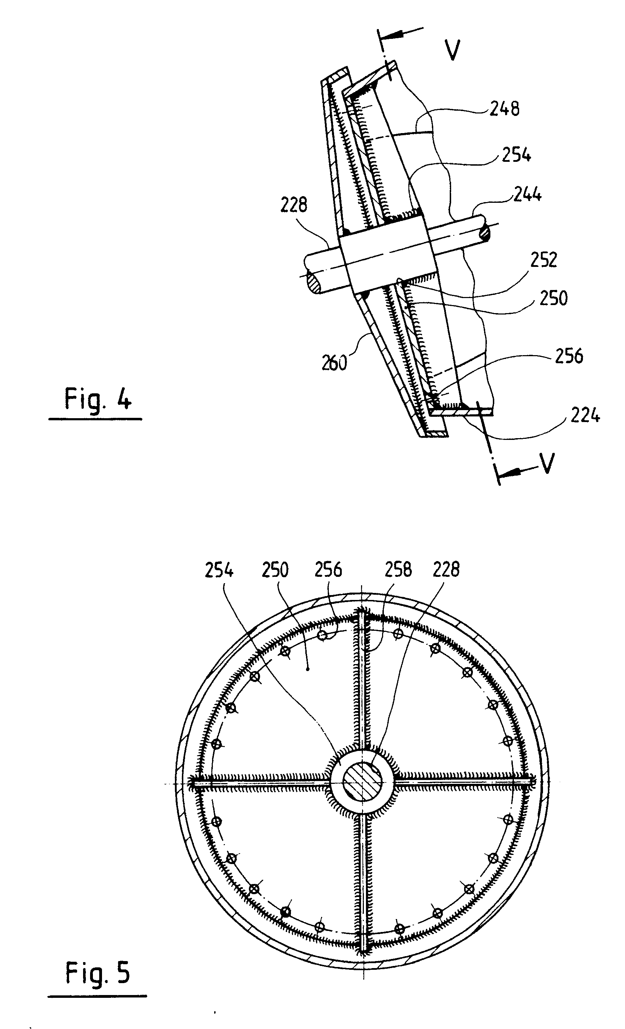

In Fig. 3 bis 5 ist eine Waschtrommel 220 mehr im einzelnen dargestellt, die von der gleichen Bauart wie die Waschtrommeln 110, 132 der Fig. 1 und 2 sein kann. Die Waschtrommel 220 umfaßt einen Trommelkörper, d.h. ein Trommelgehäuse mit einem zylindrischen Mittelteil 222 und kegelstumpfabschnittförmigen Endteilen 224, 226. Die Waschtrommel 220 ist etwas schräg zur Horizontalen geneigt angeordnet, wobei sie mittels einer am unteren Ende angebrachten Lager achse 228 in einer Lager- und Antriebseinheit 230 gelagert ist, die auf einem im Erdreich verankerten Bock 232 ruht. Im Bereich des anderen Endes, d.h. im Bereich des Abschnitts 226, trägt das Trommelgehäuse einen Lagerring 234, mittels dessen sich die von der Lager- und Antriebseinheit 230 in Drehung versetzte Waschtrommel 220 auf zwei Drehlagerelementen 236 drehabstützt, von denen eines in Fig. 3 dargestellt ist. Das Drehlagerelement 236 ist eine auf einer Welle 238 sitzende Rolle, die in zwei Vorsprüngen 240 mit etwas unterschiedlicher Länge eines Lagerbocks 242 gelagert ist.

Die Lagerachse 228 ist zum Innenraum der Waschtrommel hin zu einer Welle 244 verlängert, die sich bis etwa zur Mitte des Trommelgehäuses erstreckt. Auf der Welle 244 sitzen drei unterschiedlich orientierte Rührer 246, die zum Umwälzen und Umrühren der in der Waschtrommel enthaltenen Abfallteile dienen. Im Trommelgehäuse fest verankert sind starre, wellenförmig verlaufende Transportwendeln 248, die zum Weiterführen der in der Waschtrommel enthaltenen Teile bei deren Umrührbewegung dienen.

Am unteren Ende ist das Trommelgehäuse durch einen flachen Trommelboden 250 abgeschlossen. Der Trommelboden 250 weist eine zentrale Durchführung 252 für eine Buchse 254 auf, durch die sich ein Ende der Lagerachse 228 und der Welle 244 erstreckt. Der Trommelboden 250 weist im Randbereich einen Lochkranz mit Löchern 256 auf, die für das Auslassen von Öl/Waschflüssigkeitsemulsion vorgesehen sind. Der Trommelboden 250 ist durch vier Verstärkungsrippen 258 verstärkt, die kreuzförmig angeordnet sind. Auf der Buchse befestigt sitzt eine konusförmige Abdeckung 260, deren Rand flanschartig über das Ende des Trommelgehäuses gezogen ist. Die Abdeckung 260 ist mit Abstand zum Trommelgehäuse angeordnet.

Unterhalb der Waschtrommel 220 befindet sich eine Grube 270 im Boden. Die Grube 270 ist durch zwei Zwischenwände 272, 274 in drei Behälter 276, 278 und 280 unterteilt. Der Behälter 276 befindet sich etwa unterhalb des Trommelbodens 250 und dient als Auffangbehälter für die Öl/Waschflüssigkeitsemulsion, die aus der Waschtrommel 220 dort ausfließt. Es kommt zur Trennung derart, daß das Öl 282 auf der Waschflüssigkeit, im gezeigten Ausführungsbeispiel Wasser, 284, schwimmt. Das Öl fließt daher in den Behälter 278 über und wird aus diesem abgepumpt.

Der Behälter 276 ist über eine von seinem Boden ausgehende, mit einem Handventil 286 versehene, in den Boden des Behälters 280 mündende Leitung 288 mit dem Behälter 280 verbunden. Durch das Prinzip der kommunizierenden Röhren kommt es zur Füllung des Behälters 280 mit der Waschflüssigkeit 284. Im unteren Bereich des Behälters 280 befindet sich eine wendelförmige Leitung 290 mit einer Zuleitung 292 und einer Ableitung 294, die zur Durchleitung einer Heizflüssigkeit bestimmt ist derart, daß die im Behälter 280 enthaltene Waschflüssigkeit aufgeheizt wird. Selbstverständlich könnte zur Aufheizung der Waschflüssigkeit auch eine andere Heizeinrichtung vorgesehen werden. Eine Leitung 296 führt aus dem Behälter 280 zu einer Pumpe 298, von der aus Waschflüssigkeit über eine abgebogene Leitung 300 in das obere offene Ende der Waschtrommel 220 gepumpt wird.

Vorstehend ist die Erfindung anhand bevorzugter Ausführungsbeispiele und ausgewählter Merkmale beschrieben und dargestellt worden. Selbstverständlich ist die Erfindung nicht auf diese Darstellung beschränkt, sondern vielmehr können sämtliche Merkmale allein oder in beliebiger Kombination, auch unabhängig von ihrer Zusammenfassung in den Ansprüchen verwendet werden.

## Ansprüche

1. Recycling-Verfahren für insbesondere ölverschmutzte Betriebsmittel, bei dem die Betriebsmittel gesammelt und bestimmte Materialien für eine Wiederverwendung sortiert und/oder gereinigt werden,
dadurch **gekennzeichnet,** daß

- die Betriebsmittel nach Materialien grob vorsortiert werden,
- bestimmte der grob vorsortierten Teile zerkleinert werden und dabei frei werdendes Öl gesammelt wird,
- die zerkleinerten Teile nach Materialien getrennt werden,
- bestimmte der abgetrennten Teile zum weiteren Entfernen von Öl, Schmutz etc. gewaschen werden,
- die gewaschenen Teile nach Materialien getrennt werden,
- bestimmte der abgetrennten Teile wiederverwendet werden und
- die übrigen Teile je nach Verschmutzungsart und -grad sowie abhängig von den Materialien entsorgt, verbrannt oder deponiert werden.

2. Verfahren nach Anspruch 1, dadurch **gekennzeichnet,** daß die grobe Vorsortierung nach Metall, Kunststoff und/oder Textilien erfolgt.

3. Verfahren nach Anspruch 1 oder 2, dadurch **gekennzeichnet,** daß die Vorsortierung nach Art und/oder Größe der Betriebsmittel erfolgt.

4. Verfahren nach einem der Ansprüche 1 bis 3, dadurch **gekennzeichnet,** daß die Trennung der zerkleinerten und/oder gewaschenen Teile nach Stahl, Nichteisenmetall und/oder Filtermaterial erfolgt.

5. Verfahren nach einem der Ansprüche 1 bis 6, dadurch **gekennzeichnet,** daß mit heißem Wasser gewaschen wird.

6. Verfahren nach einem der Ansprüche 1 bis 5, dadurch **gekennzeichnet,** daß die Waschflüssigkeit wiederverwendet wird.

7. Verfahren nach Anspruch 6, dadurch **gekennzeichnet,** daß Öl aus der Waschflüssigkeit abgeschieden und entsorgt wird.

8. Verfahren nach einem der Ansprüche 1 bis 7, dadurch **gekennzeichnet,** daß vor der Zerkleinerung eine Trennung der Teile nach Metall und Kunststoff erfolgt.

9. Recycling-Anlage für insbesondere ölverschmutzte Betriebsmittel, insbesondere zur Durchführung des Verfahrens nach einem der Ansprüche 1 bis 8, mit
- einer Einrichtung zum Sortieren der Betriebsmittel und
- einer Einrichtung zum Reinigen der Betriebsmittel, **gekennzeichnet** durch
- eine Einrichtung (16, 20, 50, 70, 140) zum groben Vorsortieren der Betriebsmittel nach Materialien und/oder Art und Größe,
- eine Einrichtung (80, 82, 152) zum Zerkleinern bestimmter der vorsortierten Teile,
- eine Einrichtung zum Trennen der zerkleinerten Teile nach Materialien,
- eine Einrichtung (110, 132) zum Waschen von abgetrennten Teilen,
- eine Einrichtung (118) zum Trennen der gewaschenen Teile nach Materialien und
- Behälter (38, 60, 22, 116, 126) zum Sammeln der so sortierten Teile.

10. Anlage nach Anspruch 9, dadurch **gekennzeichnet,** daß für den Transport der Betriebsmittel und von deren Teilen Förderbänder (20 bis 124) vorgesehen sind.

11. Anlage nach Anspruch 9 oder 10, dadurch **gekennzeichnet,** daß die Einrichtung zum Vorsortieren eine oder mehrere Siebtrommeln (16) umfaßt.

12. Anlage nach einem der Ansprüche 9 bis 11, **gekennzeichnet** durch eine der (den) Siebtrommel(n) nachgeordnete Presse (52) für bestimmte der vorsortierten Teile.

13. Anlage nach einem der Ansprüche 9 bis 12, **gekennzeichnet** durch Schredder (80, 82, 152) zum Zerkleinern vorsortierter Metall- und/oder Kunststoffteile.

14. Anlage nach Anspruch 13, dadurch **gekennzeichnet,** daß Schredder (78, 80; 152) für Metall- und Kunststoffteile getrennt vorgesehen sind.

15. Anlage nach einem der Ansprüche 9 bis 14, **gekennzeichnet** durch Magnetbänder (42, 70, 98, 96, 118) zum Vorsortieren und/oder Trennen nach Materialien.

16. Anlage nach einem der Ansprüche 9 bis 15, **gekennzeichnet** durch eine oder mehrere Waschtrommeln (110, 132) zum Waschen der abgetrennten Teile.

17. Anlage nach Anspruch 16, dadurch **gekennzeichnet,** daß eine Waschtrommel (132) für Metall- und Kunststoffteile gemeinsam vorgesehen ist.

18. Anlage nach einem der Ansprüche 9 bis 17, **gekennzeichnet** durch einen Auffangbehälter (276) für das Öl/Waschflüssigkeitsgemisch nach dem Waschen, mit einer Abscheideeinrichtung (176; 272) zum Trennen der Waschflüssigkeit von dem Öl/Waschflüssigkeitsgemisch, eine Rückführeinrichtung (288, 296, 298, 300) zum Rückführen der abgetrennten Waschflüssigkeit in den Waschflüssigkeitskreislauf und eine Einrichtung (278) zum Sammeln und Abführen des Öls.

19. Waschtrommel, insbesondere zur Verwendung bei einer Anlage nach einem der Ansprüche 1 bis 18, mit einer Transportwendel und einem Rührer, dadurch **gekennzeichnet,** daß an einem Ende der Waschtrommel (220) im Randbereich eine oder mehrere Öffnungen (256) vorgesehen sind, durch die das Öl/Waschflüssigkeitsgemisch austreten kann.

20. Waschtrommel nach Anspruch 19, dadurch **gekennzeichnet,** daß im Trommelboden (250) ein Lochkranz vorgesehen ist.

21. Waschtrommel nach Anspruch 19 oder 20, dadurch **gekennzeichnet,** daß der Trommelboden (250) mit Verstärkungsrippen (258) versehen ist.

22. Waschtrommel nach einem der Ansprüche 19 bis 21, dadurch **gekennzeichnet,** daß der Trommelboden (250) von einer Abdeckung (260) überdeckt ist.

23. Waschtrommel nach einem der Ansprüche 19 bis 22, dadurch **gekennzeichnet,** daß unterhalb der Waschtrommel (220) eine Abscheide- und Rückführeinrichtung (270 bis 300) für das Öl/Waschflüssigkeitsgemisch angeordnet ist.

Fig. 1

Fig. 2

EP 0 422 501 A1

Fig. 3

EP 0 422 501 A1

Fig. 4

248
254
244
228
252
250
256
224
260

Fig. 5

254  250  256  258  228

**EINSCHLÄGIGE DOKUMENTE**

EP 90119007.4

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | EP - A2 - 0 279 469 (ARMER,R) * Zusammenfassung * -- | 1,9 | B 09 B 3/00 B 09 B 5/00 B 08 B 3/06 |
| A | EP - A2/A3 - 0 104 773 (NATIONAL ENVIRONMENTAL CONTROLS INC) * Zusammenfassung * -- | 1,9,19 | |
| A | DE - A1 - 3 836 584 (KADELKA,F) * Zusammenfassung * -- | 1,9 | |
| A | DE - B2 - 1 916 672 (BLACK CLAWSON FIBRECLAIM) * Anspruch 1 * -- | 1,9,19 | |
| A | US - A - 4 077 847 (CHOI et al.) * Zusammenfassung * ---- | 1,9,19 | |

RECHERCHIERTE SACHGEBIETE (Int. Cl⁵)

B 09 B 3/00
B 09 B 5/00
B 08 B 3/00

Der vorliegende Recherchenbericht wurde für alle Patentansprüche erstellt.

| Recherchenort | Abschlußdatum der Recherche | Prüfer |
|---|---|---|
| WIEN | 27-11-1990 | BRUS |